(19) **Europäisches Patentamt European Patent Office Office européen des brevets**

(11) **EP 4 465 564 A1**

(12) **EUROPEAN PATENT APPLICATION**
published in accordance with Art. 153(4) EPC

(43) Date of publication:
**20.11.2024  Bulletin 2024/47**

(21) Application number: **23740380.3**

(22) Date of filing: **04.01.2023**

(51) International Patent Classification (IPC):
**H04L 1/08** (2006.01)     **H04L 5/00** (2006.01)
**H04W 56/00** (2009.01)

(52) Cooperative Patent Classification (CPC):
**H04L 1/08; H04L 5/00; H04W 56/00**

(86) International application number:
**PCT/KR2023/000116**

(87) International publication number:
**WO 2023/136535 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **11.01.2022   KR 20220004343**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **KO, Hyunsoo**
  **Seoul 06772 (KR)**
• **YOU, Hyangsun**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING UPLINK IN WIRELESS COMMUNICATION SYSTEM**

(57)     Disclosed are a method and device for transmitting and receiving uplink in a wireless communication system. The method performed in a wireless communication system by a terminal according to an embodiment disclosed herein may comprise the steps of: receiving information indicating that demodulation reference signal (DMRS) bundling for a physical uplink shared channel is enabled; performing, in a specific slot, transmission timing adjustment for uplink transmission; and transmitting at least one PUSCH in a time domain window related to the DMRS bundling on the basis of at least one symbol being excluded from a subsequent slot adjacent to the specific slot.

FIG.8

START

Receive DMRS bundling enable information for PUSCH — S810

Perform transmission timing adjustment in a specific slot — S820

Based on at least one symbol being excluded in an adjacent subsequent slot, transmit PUSCH in a time domain window — S830

END

EP 4 465 564 A1

**Description**

[Technical Field]

The present disclosure relates to a wireless communication system, and more particularly, to a method and apparatus for performing uplink transmission and reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for performing uplink transmission and reception.

An additional technical object of the present disclosure is to provide a method and apparatus for performing uplink transmission and reception in consideration of timing advance (TA) adjustment.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: receiving information on that demodulation reference signal (DMRS) bundling for a physical uplink shared channel is enabled; performing transmission timing adjustment for uplink transmission in a specific slot; and based on at least one symbol being excluded in a subsequent slot adjacent to the specific slot, transmitting at least one PUSCH in a time domain window related to the DMRS bundling.

A method performed by a base station in a wireless communication system according to an additional aspect of the present disclosure may comprise: transmitting information on that demodulation reference signal (DMRS) bundling for a physical uplink shared channel is enabled; and based on transmission timing adjustment for uplink transmission in a specific slot and at least one symbol being excluded in a subsequent slot adjacent to the specific slot, receiving at least one PUSCH in a time domain window related to the DMRS bundling.

[Technical Effects]

According to the present disclosure, a method and apparatus for performing uplink transmission and reception in consideration of TA adjustment and/or DMRS bundling may be provided.

According to the present disclosure, the base station and the UE may have a common understanding of the boundaries of the actual time domain window in relation to uplink transmission and reception.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates PUSCH repetition transmission considering slots reduced by TA adjustment in a wireless communication system according to an embodiment of the present disclosure.

FIG. 8 illustrates the operation of a UE for an uplink transmission and reception method in a wireless communication system according to an embodiment of the present disclosure.

FIG. 9 illustrates the operation of a base station for an uplink transmission and reception method in a wireless communication system according to an embodiment of the present disclosure.

FIG. 10 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator

Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

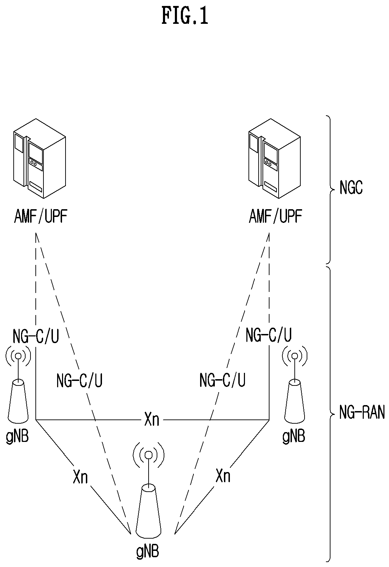

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

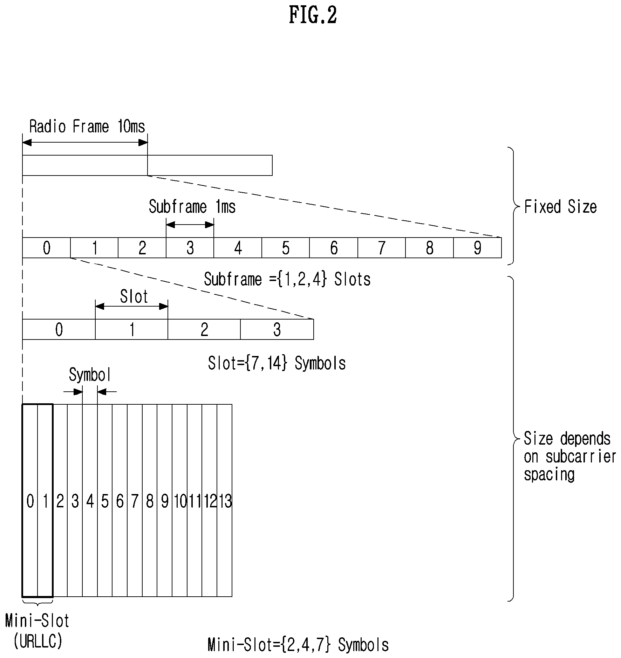

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services.

For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz-7125MHz | 15, 30, 60kHz |
| FR2 | 24250MHz-52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c=10ms$. Here, a radio frame is configured with 10 subframes having a duration of $T_{sf}=(\Delta f_{max} N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

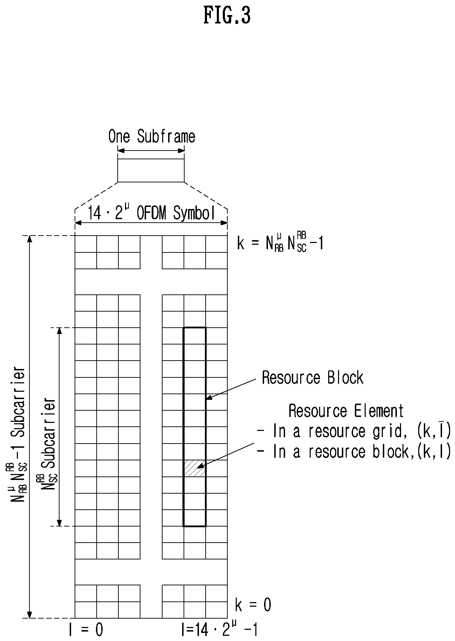

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

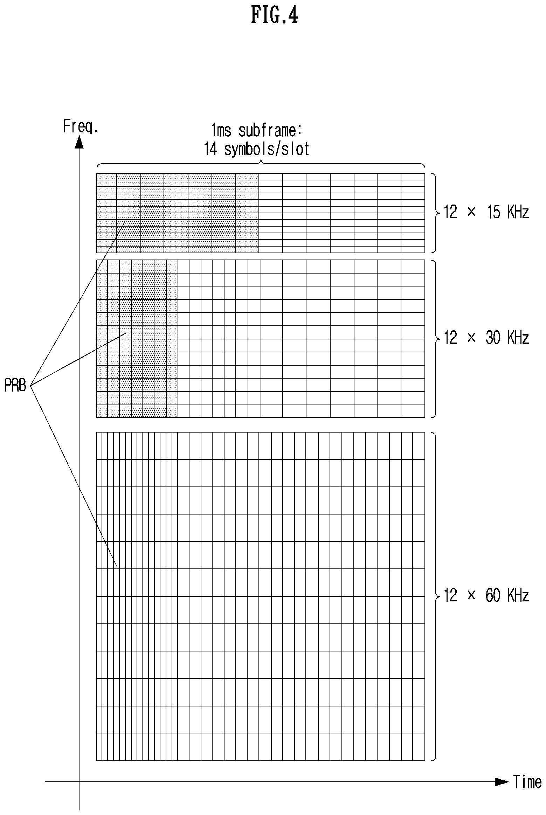

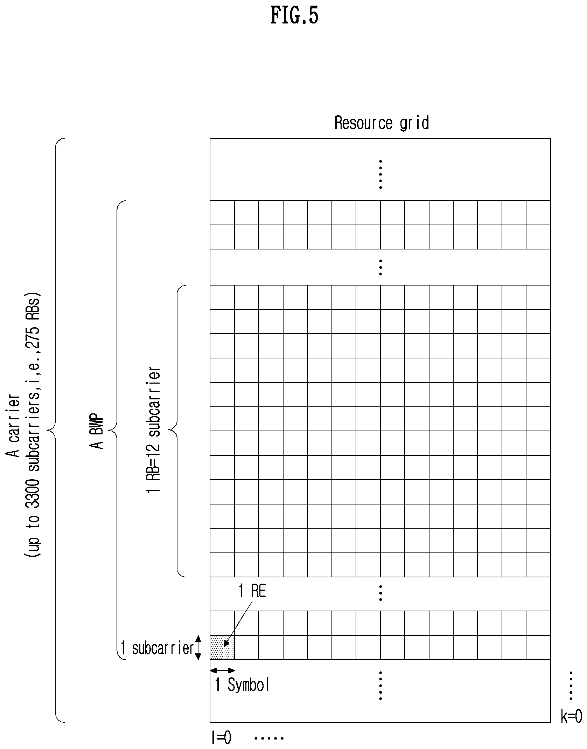

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

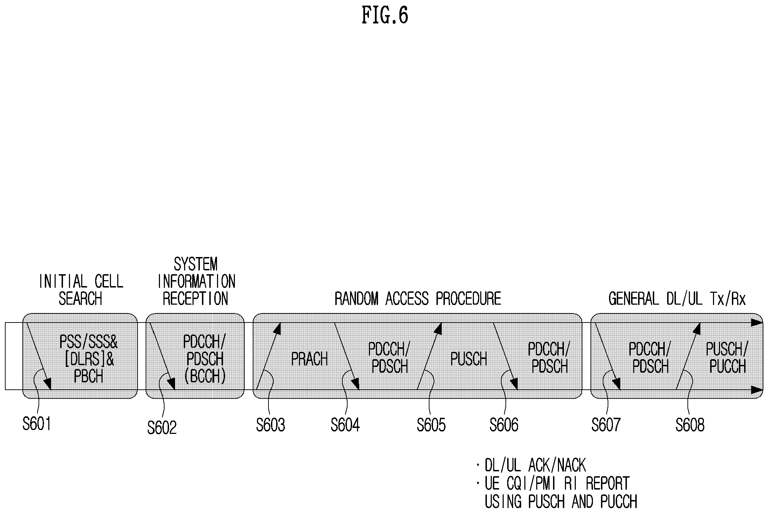

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |

(continued)

| DCI Format | Use |
|---|---|
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.


Uplink transmission and reception method considering TA adjustment


The present disclosure proposes methods for transmitting and receiving an uplink channel and/or signal by considering TA adjustment.

Methods of clarifying the boundaries of the actual time domain window (hereinafter, it is referred to as actual TDW) for transmission of uplink channels (e.g., PUSCH) where reduced slots and/or DMRS bundling are considered due to TA adjustment are proposed.

For example, when adjacent slots (i.e., two adjacent slots) overlap due to TA adjustment by indication of the base station and/or autonomous TA adjustment of the UE, subsequent/latter slots may be reduced in the time domain compared to former slots.

As a specific example, TA adjustment according to instructions from the base station may mean TA adjustment performed by the UE according to the TA command instructed by the base station (via MAC-CE, etc.). Additionally, autonomous TA adjustment may mean TA adjustment that the UE performs autonomously (i.e., regardless of indication of the base station) when the mismatch in time synchronization between the base station and the UE exceeds a pre-defined/configured time (e.g., a certain CP length).

Additionally, in the present disclosure, for convenience of explanation, as described above, subsequent slots that are reduced in the time domain by TA adjustment are referred to as 'reduced slots'.

That is, compared to a slot commonly defined in a wireless communication system (e.g., 14 symbols, 1 msec), in the present disclosure, a reduced slot may mean a slot in which some symbols/absolute time are considered/recognized/indicated/configured to be reduced due to TA adjustment, etc.

At this time, in relation to DMRS bundling for uplink transmission, if the slot that starts DMRS bundling corresponds to the above-described reduced slot, the boundary of the TDW between the base station and the UE and the subsequent operation of the UE accordingly need to be clarified.

For example, when a UE capable of restarting DMRS bundling after a dynamic event receives indication/provided TA adjustment indicated by the base station in the nth slot within the configured TDW, a new actual TDW may be configured/constructed starting from the $n^{th}$ slot. That is, the UE may configure/construct a new actual TDW starting from the $n^{th}$ slot. Additionally or alternatively, if a semi-static event occurs within the configured TDW, the UE may perform autonomous TA adjustment at the boundary of the actual TDW. Therefore, if the actual TDW is terminated due to a semi-static event in the n-$1^{th}$ slot, a new actual TDW may be configured/constructed starting from the $n^{th}$ slot. Additionally or alternatively, for a UE indicated to apply TA in the $n^{th}$ slot starting the configured TDW (i.e., a UE indicated to perform TA adjustment in the $n^{th}$ slot), a new actual TDW may be configured/constructed starting from the $n^{th}$ slot.

In this regard, if the $n^{th}$ slot for PUCCH is a reduced slot and the UE fails to transmit some symbols that shall transmit PUCCH by the reduced slot, an operation of the UE for PUCCH repetition transmission may be clear as follows. As an example, for slots reduced due to TA adjustment, if the previously defined PUCCH repetitive transmission procedure is followed, PUCCH transmission is dropped and actual TDW may not start.

Additionally or alternatively, if the $n^{th}$ slot for the PUSCH is a reduced slot and the UE fails to transmit some symbols that shall transmit the PUSCH by the reduced slot, The operation of the UE for PUSCH repetition type A (i.e., slot structure-based PUSCH repetition transmission type) may be clear as follows. As an example, the same symbol allocation may be applied across PUSCH repetition transmissions (i.e., K consecutive slots). However, if time domain resource allocation (TDRA) is not satisfied (i.e., if the TDRA table is not satisfied), as in the example of repeated PUCCH transmission described above, it is not clearly defined that the UE does not perform PUSCH transmission, so the operation of the UE may be ambiguous.

Additionally, even in the case of PUSCH repetition type B (i.e., a PUSCH repetition transmission type unrelated to the slot structure), the operation of the UE may be ambiguous. For example, for PUSCH repetition type B, the UE may determine the boundary of nominal repetition based on the number of symbols in the slot according to the CP length and determine invalid symbol(s). The UE may determine the boundary of actual repetition based on the remaining symbols excluding the invalid symbol(s). Afterwards, if a situation occurs in which PUSCH transmission is impossible in some symbol(s) among the symbols to be used for actual repetition, the UE may drop the corresponding actual repetition. However, at this time, the reduced slots as described above in the existing case are not considered. Therefore, it may be ambiguous whether the UE transmits a PUSCH corresponding to PUSCH repetition type B for the reduced slot, and the boundary of the actual TDW may vary accordingly.

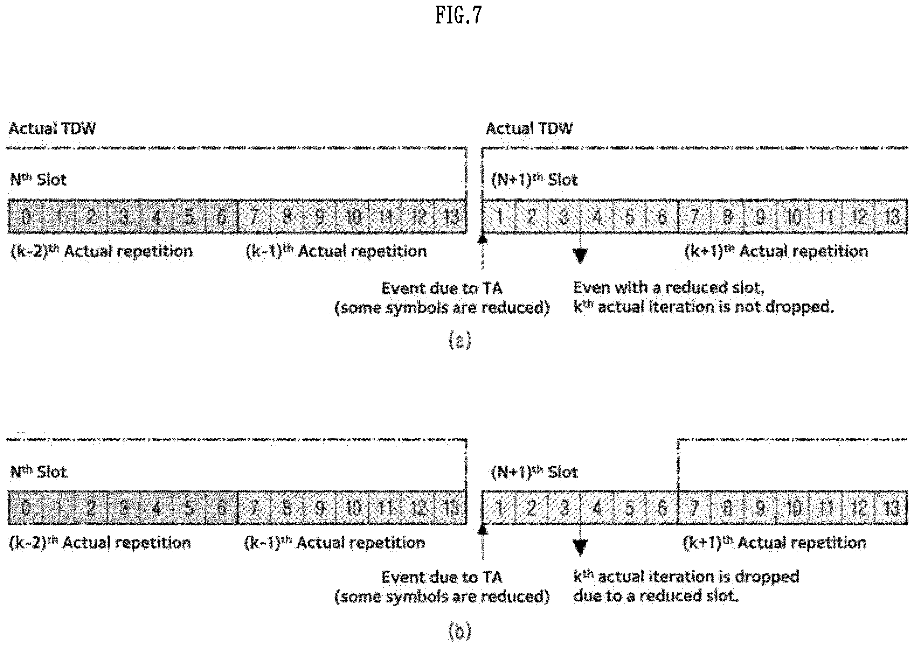

FIG. 7 illustrates PUSCH repetitive transmission considering slots reduced by TA adjustment in a wireless communication system according to an embodiment of the present disclosure.

Referring to FIG. 7, with respect to PUSCH repetition type B, FIG. 7(a) illustrates a case where actual repetition (i.e., actual repetition transmission) is not dropped due to reduced slots, FIG. 7(b) illustrates a case where actual repetitions are dropped due to reduced slots. FIGS. 7(a) and 7(b) illustrate a case where some symbols (e.g., the first symbol) are omitted/disappear due to application of TA adjustment in the $(N+1)^{th}$ slot.

In the case of FIG. 7(a), if some symbols (e.g., 1 symbol) for transmission of PUSCH repetition type B are reduced due to the reduced slot, the starting point of the actual TDW may change depending on whether the actual iteration is dropped. If the reduced slot does not affect the actual repetition, the actual starting point of TDW may be the slot started by the TA indication. At this time, if the actual TDW starts with an actual repeated transmission containing reduced symbols due to TA adjustment during the transmission of the PUSCH repetition type B, the understanding of the actual starting point of TDW between the base station and the UE may be inconsistent.

On the other hand, in the case of PUSCH repetition type B as shown in FIG. 7(b), if the actual iteration is dropped with some symbols (e.g., 1 symbol) reduced/removed due to the reduced slot, the starting point of the actual TDW may be the starting symbol of the subsequent actual repetition. In this case, the gap between actual repetitions may be 13 symbols or more based on the relative position of the transmission at the slot boundary.

Since the starting boundary of the actual TDW is different for each of the cases of FIGS. 7(a) and 7(b) described above, clarification of the actual TDW boundary may be necessary.

For example, if the symbol to be removed for the cases of FIGS. 7(a) and 7(b) is 1, due to the reduced slot in the (N+1)th slot, there are only 13 symbol indices in total, and the symbol length for PUSCH repetition type B may be 7.

As described above, FIG. 7(a) shows a case where the $k^{th}$ actual repetition is not dropped/removed even though the slot is reduced due to TA adjustment. That is, even though the different actual repetitions (e.g., the k-$2^{th}$ actual repetition, the k-$1^{th}$ actual repetition, and the k+$1^{th}$ actual repetition) consist of 7 symbols, the $k^{th}$ actual repetition may be transmitted using 6 symbols. Since all actual repetitions are transmitted and TA is applied from the start of the $(N+1)^{th}$ slot, the actual TDW may start from the start of the $(N+1)^{th}$ slot.

On the other hand, FIG. 7(b) iluustrates a case where the $k^{th}$ actual repetition is dropped/removed due to reduced slots due to TA adjustment. That is, even though 7 symbols are expected to be used, the $k^{th}$ actual repetition may not be transmitted due to the fact that only 6 symbols are available. Since the $k^{th}$ actual repetition is not transmitted and the TA is applied at the start of the $(N+1)^{th}$ slot, the actual TDW may start with symbol index 7 in the $(N+1)^{th}$ slot, rather than the starting point of the (N+1)$^{th}$ slot.

In other words, whether the actual repetition of PUSCH repetition type B is transmitted in the reduced slot due to TA adjustment may affect the actual starting point of TDW.

Hereinafter, in consideration of the above-described contents, the present disclosure describes in detail methods for clarifying the actual TDW boundary and UE operation when TA adjustment is performed.

Embodiment 1

This embodiment relates to an uplink transmission and reception method considering TA adjustment performed by the UE in a general wireless communication network environment.

The TA adjustment described in this embodiment may correspond to TA adjustment by indication of the base station as described above and/or autonomous TA adjustment (regardless of indication of the base station).

When the UE has joint channel estimation (joint CE) enabled, reduced slots may occur due to the TA adjustment described above. Here, joint channel estimation may be related to operations according to the DMRS bundling and the actual TDW associated therewith described above in the present disclosure.

In this case, application of at least one of the following methods (hereinafter, methods 1-1 to 1-3) may be considered.

(Method 1-1)

When TA adjustment is performed in the N$^{th}$ slot, if overlap between the N$^{th}$ slot and the (N+1)$^{th}$ slot occurs due to the corresponding TA adjustment (i.e., TA application), and the (N+1)$^{th}$ slot corresponds to a reduced slot, the UE may always determine the (N+1)$^{th}$ slot as a slot in which the first symbol does not exist. That is, for PUSCH transmission by the UE, the first symbol may be excluded. This method may be applied regardless of whether the joint channel estimation of the UE is activated/deactivated.

In this case, the UE may not perform transmission of a PUSCH that does not satisfy pre-defined/configured/indicated TDRA (conditions) (e.g., TDRA table). Additionally, with regard to PUSCH repetition type B, the UE may determine that the first symbol of the reduced slot is an invalid symbol.

This method has advantages in terms of simplicity of UE operation.

(Method 1-2)

When TA adjustment is performed in the N$^{th}$ slot, if overlap between the N$^{th}$ slot and the (N+1)$^{th}$ slot occurs due to the corresponding TA adjustment (i.e., TA application), and the (N+1)$^{th}$ slot corresponds to a reduced slot, the UE may always determine the (N+1)$^{th}$ slot as a slot in which the first symbol does not exist. That is, for PUSCH transmission by the UE, the first symbol may be excluded. This method may be applied from after joint channel estimation is activated until joint channel estimation is deactivated.

This method may be intended to match the understanding between the base station and the UE regarding the boundary of the actual TDW in relation to joint channel estimation, especially the starting point of the actual TDW after TA indication by the base station and/or after autonomous TA.

In this case, while joint channel estimation is activated, the UE may not perform transmission of a PUSCH that does not satisfy the pre-defined/configured/indicated TDRA (condition) (e.g., TDRA table) for the transmitted PUSCH, by performing DMRS bundling. Additionally, with regard to PUSCH repetition type B, the UE may determine that the first symbol of the reduced slot is an invalid symbol.

The complexity of the UE may increase in this method compared to method 1-1 described above. However, if joint channel estimation is not activated, in that the UE transmits the PUSCH even if it does not satisfy the pre-defined/configured/indicated TDRA (condition) (e.g., TDRA table) for the reduced slot, the opportunity for PUSCH transmission may be increased.

(Method 1-3)

When TA adjustment is performed in the N$^{th}$ slot, the UE may always determine the (N+1)$^{th}$ slot as a slot in which the first symbol does not exist. That is, for PUSCH transmission by the UE, the first symbol may be excluded. This method may be applied from when joint channel estimation is activated until joint channel estimation is deactivated, and may be applied regardless of whether there is overlap between adjacent slots due to TA adjustment (i.e., TA application).

Similar to method 1-2 described above, this method may also be intended to match the understanding between the base station and the UE regarding the boundary of the actual TDW in relation to joint channel estimation, especially the starting point of the actual TDW after TA instruction by the base station and/or after autonomous TA.

In this case, while joint channel estimation is activated, the UE may not perform transmission of a PUSCH that does not satisfy pre-defined/configured/indicated TDRA (conditions) (e.g., TDRA table) by performing DMRS bundling. Additionally, with regard to PUSCH repetition type B, the UE may determine that the first symbol of the reduced slot is an invalid symbol.

Unlike the method 1-2 described above, the terminal does not determine whether there is overlap due to TA adjustment, and may always exclude the first symbol after TA adjustment. Through this, the operation of the UE may be simplified and misunderstanding between the base station and the UE regarding the actual TDW may be reduced.

The methods in the present embodiment may be applied considering a typical network environment in which indication for TA and/or autonomous TA adjustment are not continuous.

Additionally or alternatively to the above-described embodiments, a case in which TA indication and/or autonomoud TA adjustment is continuously performed considering the mobility of the entity may be considered.

Embodiment 2

This embodiment relates to an uplink transmission and reception method considering TA adjustment performed by the UE in a wireless communication network environment where TA indication and/or autonomous TA adjustment are continuously performed in consideration of mobility.

For example, this embodiment may be applied in a situation where TA indication and/or autonomous TA adjustment are continuously performed due to the mobility of the network itself, such as a non-terrestrial network (NTN) network and/or a mobile integrated access and backhaul (IAB). Additionally or alternatively, this embodiment may be applied in a situation where TA indication and/or autonomous TA adjustment are continuously performed due to the mobility of the UE itself.

The proposed method in this embodiment is described based on the NTN network for convenience of explanation, but may be extended and applied not only to the NTN network but also to networks in which mobility exists between a base station (e.g., gNB) and a UE. Additionally, the proposed method in this embodiment may be applicable to cases where mobility is predictable. Additionally, the proposed method in this embodiment is described based on direct communication between a satellite and a terminal for convenience of explanation, but may be extended and applied even when communication is performed in conjunction with a terrestrial base station.

In the case of an NTN network, two types of time intervals may exist depending on the satellite's movement path. In other words, there may be a time interval in which the distance between the satellite and the UE continues to get closer, and there may be a time interval in which the distance between the satellite and the UE continues to increase.

For example, in a time period in which the distance between the satellite and the UE continuously decreases, the UE may continuously receive TA indication in order to synchronize the received signal of the satellite. The UL transmission timing is delayed by the TA indication, and $T_A$ may be a positive value in $N_{TA\_new}=N_{TA\_old}+(T_A-31)*16*64/2^\mu$.

Therefore, when the UE performs TA adjustment in the $N^{th}$ slot, a gap may exist between the $(N-1)^{th}$ slot and the $N^{th}$ slot. In this regard, the gap may be related to an event that undermines phase continuity and power consistency of DMRS bundling. That is, since the TA indication by the base station (always) corresponds to the event, the UE may (always) recognize the TA indication by the base station as the event regardless of the size of the gap.

For another example, in a time period where the distance between the satellite and the UE continuously increases, the UE may continuously receive TA indication in order to synchronize the received signal of the satellite. The UL transmission timing is pulled forward by the TA indication, and $T_A$ may be a negative value in $N_{TA\_new}=N_{TA\_old}+(T_A-31)*16*64/2^\mu$.

Therefore, when the UE performs TA adjustment in the $N^{th}$ slot, the $N^{th}$ slot may be a reduced slot (i.e., a slot reduced due to TA adjustment) as described above in the present disclosure. That is, as described above in the present disclosure (e.g., Embodiment 1), the UE may determine that the first symbol of the $N^{th}$ slot does not exist. That is, the first symbol of the $N^{th}$ slot may be excluded from transmission and reception.

Additionally or alternatively, a case in which one or more symbols are reduced depending on the TA value may be considered. This is because in the case of an NTN network, the value of TA adjustment performed due to a single indication may increase depending on the movement speed. Additionally, the size of the symbol being reduced and/or the period of the TA indication may be related to the state speed between the satellite and the UE and/or the absolute speed of the satellite.

Regarding the time interval in which the distance between the satellite and the UE as described above continues to increase, the following methods (hereinafter, methods 2-1 and 2-2) may be applied to all or part of the time interval.

(Method 2-1)

When a UE transmits a PUSCH by receiving indication for joint channel estimation, the UE may be indicated to apply TA in the $N^{th}$ slot.

At this time, even if the N$^{th}$ slot does not satisfy the pre-defined/configured/indicated TDRA (condition) (e.g., TDRA table), the UE may perform transmission corresponding to PUSCH repetition type A. Additionally or alternatively, at this time, even if the N$^{th}$ slot does not satisfy the pre-defined/configured/indicated TDRA (condition) (e.g. TDRA table), regarding PUSCH repetition type B, if the actual repetition is 1 symbol or more, the UE may (always) perform transmission for the actual repetition.

If PUSCH transmission is dropped due to continuously reduced slots, reception performance of joint channel estimation may not be guaranteed, so an operation such as Method 2-1 may be defined/configured.

The time interval related to the method may be a value calculated based on the satellite's movement path and/or movement speed. Additionally or alternatively, the time interval associated with the method may be a time interval established by the satellite and/or base station.

(Method 2-2)

When a UE transmits a PUSCH by receiving indication for joint channel estimation, the UE may be indicated to apply TA in the N$^{th}$ slot.

At this time, if the N$^{th}$ slot does not satisfy the pre-defined/configured/indicated TDRA (condition) (e.g., TDRA table), the UE may not perform transmission corresponding to PUSCH repetition type A. Additionally or alternatively, if the N$^{th}$ slot does not satisfy a pre-defined/configured/indicated TDRA (condition) (e.g. TDRA table), regarding PUSCH repetition type B, if the actual repetition corresponds to an interval where no symbols exist due to a reduced slot, the UE may not perform transmission for the actual repetition.

In order to eliminate misunderstandings about the start boundary of the actual TDW and unify the operation of the UE, an operation such as Method 2-2 may be defined/configured.

The time interval related to the method may be a value calculated based on the satellite's movement path and/or movement speed. Additionally or alternatively, the time interval associated with the method may be a time interval established by the satellite and/or base station.

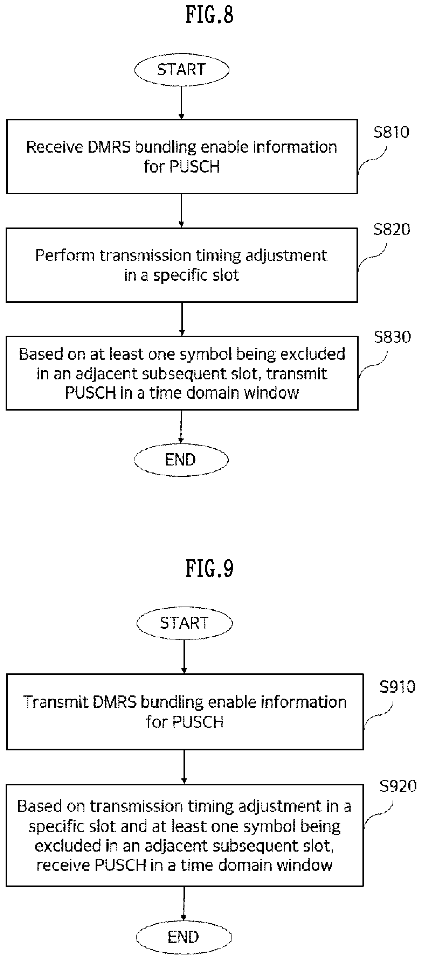

FIG. 8 illustrates the operation of a UE for an uplink transmission and reception method in a wireless communication system according to an embodiment of the present disclosure.

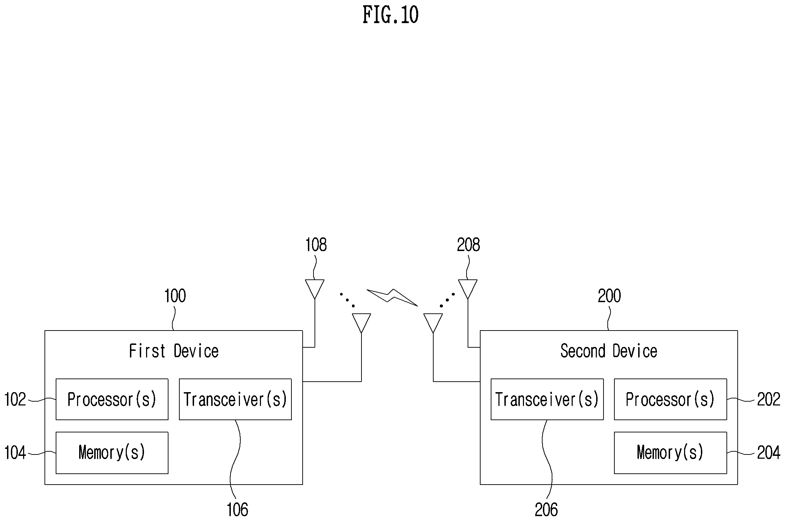

FIG. 8 illustrates an operation of the UE based on the previously proposed method (e.g., any one of Embodiments 1 and 2 and the detailed embodiments thereof, or a combination of more than one (detailed) embodiments). The example in FIG. 8 is for convenience of explanation and does not limit the scope of the present disclosure. Some step(s) illustrated in FIG. 8 may be omitted depending on the situation and/or setting. Additionally, the UE in FIG. 8 is only examples, and may be implemented as devices illustrated in FIG. 10 below. For example, the processors 102/202 of FIG. 10 may control transmission and reception of channels/signals/data/information, etc. using the transceivers 106/206, and may control to store transmitted or received channels/signals/data/information, etc. in the memory 104/204.

Referring to FIG. 8, in step S810, the UE may receive information that DMRS bundling for PUSCH is activated. Here, DMRS bundling may be for joint channel estimation described above in the present disclosure.

As an example, the information may be provided to the UE by the base station through higher layer signaling (e.g., RRC signaling, etc.).

In step S820, the UE may perform transmission timing adjustment for uplink transmission in a specific slot.

For example, as in embodiments in the present disclosure, the corresponding transmission timing adjustment may be at least one of TA adjustment performed autonomously by the UE (e.g., the autonomous TA adjustment described above) or TA adjustment performed by indication from the base station (e.g., TA adjustment according to the indication of the base station described above).

In step S830, the UE may determine that at least one symbol is excluded from a subsequent slot adjacent to the specific slot and transmit at least one PUSCH. At this time, the at least one PUSCH may be transmitted in a time domain window (e.g., the actual TDW described above) related to the DMRS bundling.

For example, as with embodiments in the present disclosure, the at least one symbol may include the first symbol of a subsequent slot. That is, the UE may determine that the first symbol of the subsequent slot does not exist and perform PUSCH transmission accordingly. The number of the at least one symbol may be defined/determined/configured/indicated in consideration of the degree of transmission timing adjustment (e.g., TA adjustment).

Additionally or alternatively, the subsequent slot may correspond to a slot in which the at least one symbol is reduced due to the transmission timing adjustment in the time domain. As an example, the subsequent slot may correspond to a slot reduced due to the TA adjustment described above in the present disclosure.

Additionally or alternatively, the subsequent slot may be associated with a starting point of a time domain window in which the at least one PUSCH is transmitted.

Additionally or alternatively, when the at least one PUSCH is transmitted according to PUSCH repetition type B (i.e., a PUSCH repetition transmission type that is not based on a slot structure), as described above, at least one excluded symbol may be determined to be an invalid symbol.

Additionally or alternatively, the UE may determine that at least one symbol is excluded from a subsequent slot adjacent to the specific slot, and may not transmit a PUSCH that does not satisfy a pre-defined/configured/indicated TDRA (condition) (e.g., TDRA table).

Additionally or alternatively, the UE may determine that at least one symbol is excluded from a subsequent slot adjacent to the specific slot until the DMRS bundling is disabled. That is, after deactivation of DMRS bundling, at least one symbol may not be excluded from PUSCH transmission.

FIG. 9 illustrates the operation of a base station for an uplink transmission and reception method in a wireless communication system according to an embodiment of the present disclosure.

FIG. 9 illustrates an operation of the base station based on the previously proposed method (e.g., any one of Embodiments 1 and 2 and the detailed embodiments thereof, or a combination of more than one (detailed) embodiments). The example in FIG. 9 is for convenience of explanation and does not limit the scope of the present disclosure. Some step(s) illustrated in FIG. 9 may be omitted depending on the situation and/or setting. Additionally, the base station in FIG. 9 is only examples, and may be implemented as devices illustrated in FIG. 10 below. For example, the processors 102/202 of FIG. 10 may control transmission and reception of channels/signals/data/information, etc. using the transceivers 106/206, and may control to store transmitted or received channels/signals/data/information, etc. in the memory 104/204.

Referring to FIG. 9, in step S910, the base station may transmit information that DMRS bundling for PUSCH is activated. Here, DMRS bundling may be for joint channel estimation described above in the present disclosure.

As an example, the information may be provided to the UE by the base station through higher layer signaling (e.g., RRC signaling, etc.).

In step S920, the base station may receive at least one PUSCH by adjusting transmission timing for uplink transmission in a specific slot and determining that at least one symbol is excluded from a subsequent slot adjacent to the specific slot. At this time, the at least one PUSCH may be received in a time domain window (e.g., the actual TDW described above) related to the DMRS bundling.

For example, as in embodiments in the present disclosure, the corresponding transmission timing adjustment may be at least one of TA adjustment performed autonomously by the UE (e.g., the autonomous TA adjustment described above) or TA adjustment performed by indication from the base station (e.g., TA adjustment according to the indication of the base station described above).

Additionally or alternatively, the at least one symbol may include the first symbol of a subsequent slot. That is, the base station may determine that the first symbol of the subsequent slot does not exist and perform PUSCH reception accordingly. The number of the at least one symbol may be defined/determined/configured/indicated in consideration of the degree of transmission timing adjustment (e.g., TA adjustment).

Additionally or alternatively, the subsequent slot may correspond to a slot in which the at least one symbol is reduced due to the transmission timing adjustment in the time domain. As an example, the subsequent slot may correspond to a slot reduced due to the TA adjustment described above in the present disclosure.

Additionally or alternatively, the subsequent slot may be associated with a starting point of a time domain window in which the at least one PUSCH is transmitted.

Additionally or alternatively, when the at least one PUSCH is transmitted according to PUSCH repetition type B (i.e., a PUSCH repetition transmission type that is not based on a slot structure), as described above, at least one excluded symbol may be determined to be an invalid symbol.

Additionally or alternatively, the UE may determine that at least one symbol is excluded from a subsequent slot adjacent to the specific slot, and may not transmit a PUSCH that does not satisfy a pre-defined/configured/indicated TDRA (condition) (e.g., TDRA table).

Additionally or alternatively, the determination, by the base station, that at least one symbol is excluded from a subsequent slot adjacent to the specific slot may be valid until the DMRS bundling is disabled. That is, after deactivation of DMRS bundling, at least one symbol may not be excluded from PUSCH transmission.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc.

mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving information on that demodulation reference signal (DMRS) bundling for a physical uplink shared channel is enabled;
   performing transmission timing adjustment for uplink transmission in a specific slot; and
   based on at least one symbol being excluded in a subsequent slot adjacent to the specific slot, transmitting at least one PUSCH in a time domain window related to the DMRS bundling.

2. The method of claim 1,
   wherein the at least one symbol comprises a first symbol of the subsequent slot.

3. The method of claim 1,
   wherein the subsequent slot corresponds to a lsot in which the at least one symbol is reduced due to the transmission timing adjustment in the time domain.

4. The method of claim 1,
   wherein the subsequent slot is related to a starting point of the time domain window.

5. The method of claim 1,
   wherein the transmission timing adjustment is at least one of timing advance (TA) adjustment performed autonomously by the UE or TA adjustment performed by indication of a base station.

6. The method of claim 1,
   wherein, based on the at least one PUSCH being transmitted according to PUSCH repetition type B, the at least one symbol is determined to be an invalid symbol.

7. The method of claim 1,
   wherein, based on the at least one symbol being excluded in a subsequent slot adjacent to the specific slot, a PUSCH that does not satisfy a pre-defined time domain resource allocation (TDRA) is not transmitted by the UE.

8. The method of claim 1,
   wherein exclusion of the at least one symbol is valid until the DMRS bundling is disabled.

9. A user equipment (UE) in a wireless communication system, the UE comprising:

   at least one transceiver; and
   at least one processor coupled with the at least one transceiver,
   wherein the at least one processor is configured to:

   receive information on that demodulation reference signal (DMRS) bundling for a physical uplink shared channel is enabled;
   perform transmission timing adjustment for uplink transmission in a specific slot; and
   based on at least one symbol being excluded in a subsequent slot adjacent to the specific slot, transmit at least one PUSCH in a time domain window related to the DMRS bundling.

10. A method performed by a base station in a wireless communication system, the method comprising:

transmitting information on that demodulation reference signal (DMRS) bundling for a physical uplink shared channel is enabled;
based on transmission timing adjustment for uplink transmission in a specific slot and at least one symbol being excluded in a subsequent slot adjacent to the specific slot, receiving at least one PUSCH in a time domain window related to the DMRS bundling.

11. A user equipment (UE) in a wireless communication system, the UE comprising:

at least one transceiver; and
at least one processor coupled with the at least one transceiver,
wherein the at least one processor is configured to:

transmit information on that demodulation reference signal (DMRS) bundling for a physical uplink shared channel is enabled;
based on transmission timing adjustment for uplink transmission in a specific slot and at least one symbol being excluded in a subsequent slot adjacent to the specific slot, receive at least one PUSCH in a time domain window related to the DMRS bundling.

12. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations,
wherein the operations include:

receiving information on that demodulation reference signal (DMRS) bundling for a physical uplink shared channel is enabled;
performing transmission timing adjustment for uplink transmission in a specific slot; and
based on at least one symbol being excluded in a subsequent slot adjacent to the specific slot, transmitting at least one PUSCH in a time domain window related to the DMRS bundling.

13. At least one non-transitory computer-readable medium storing at least one instruction, wherein:
the at least one instruction executable by at least one processor controls a device in a wireless communication system to:

receive information on that demodulation reference signal (DMRS) bundling for a physical uplink shared channel is enabled;
perform transmission timing adjustment for uplink transmission in a specific slot; and
based on at least one symbol being excluded in a subsequent slot adjacent to the specific slot, transmit at least one PUSCH in a time domain window related to the DMRS bundling.

# FIG.1

# FIG.2

## FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

# FIG.6

INITIAL CELL SEARCH — PSS/SSS& [DLRS]& PBCH — S601

SYSTEM INFORMATION RECEPTION — PDCCH/ PDSCH (BCCH) — S602

RANDOM ACCESS PROCEDURE — PRACH (S603), PDCCH/ PDSCH (S604), PUSCH (S605), PDCCH/ PDSCH (S606)

GENERAL DL/UL Tx/Rx — PDCCH/ PDSCH (S607), PUSCH/ PUCCH (S608)

· DL/UL ACK/NACK
· UE CQI/PMI RI REPORT USING PUSCH AND PUCCH

# FIG.7

Actual TDW

Actual TDW

N<sup>th</sup> Slot

(N+1)<sup>th</sup> Slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|

| 1 | 2 | 3 | 4 | 5 | 6 | 7 | 8 | 9 | 10 | 11 | 12 | 13 |
|---|---|---|---|---|---|---|---|---|----|----|----|----|

(k-2)<sup>th</sup> Actual repetition          (k-1)<sup>th</sup> Actual repetition

(k+1)<sup>th</sup> Actual repetition

Event due to TA
(some symbols are reduced)

Even with a reduced slot,
k<sup>th</sup> actual iteration is not dropped.

(a)

N<sup>th</sup> Slot

(N+1)<sup>th</sup> Slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|

| 1 | 2 | 3 | 4 | 5 | 6 | 7 | 8 | 9 | 10 | 11 | 12 | 13 |
|---|---|---|---|---|---|---|---|---|----|----|----|----|

(k-2)<sup>th</sup> Actual repetition          (k-1)<sup>th</sup> Actual repetition

(k+1)<sup>th</sup> Actual repetition

Event due to TA
(some symbols are reduced)

k<sup>th</sup> actual iteration is dropped
due to a reduced slot.

(b)

## FIG.8

START

Receive DMRS bundling enable information for PUSCH — S810

Perform transmission timing adjustment in a specific slot — S820

Based on at least one symbol being excluded in an adjacent subsequent slot, transmit PUSCH in a time domain window — S830

END

## FIG.9

START

Transmit DMRS bundling enable information for PUSCH — S910

Based on transmission timing adjustment in a specific slot and at least one symbol being excluded in an adjacent subsequent slot, receive PUSCH in a time domain window — S920

END

EP 4 465 564 A1

# FIG.10

<table>
<tr><td colspan="2"><b>INTERNATIONAL SEARCH REPORT</b></td><td>International application No.<br><br>**PCT/KR2023/000116**</td></tr>
</table>

| A. | CLASSIFICATION OF SUBJECT MATTER |
|---|---|

**H04L 1/08**(2006.01)i; **H04L 5/00**(2006.01)i; **H04W 56/00**(2009.01)i

According to International Patent Classification (IPC) or to both national classification and IPC

| B. | FIELDS SEARCHED |
|---|---|

Minimum documentation searched (classification system followed by classification symbols)

H04L 1/08(2006.01); H04L 5/00(2006.01); H04L 5/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DMRS 번들링(DMRS bundling), PUSCH 반복(PUSCH repetition), 타이밍 조정 (timing adjustment), 시간 영역 윈도우(time domain window), 슬롯(slot), 심볼(symbol)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>A | LG ELECTRONICS. Discussions on joint channel estimation for PUSCH. R1-2111980, 3GPP TSG RAN WG1 Meeting #107-e, e-Meeting. 05 November 2021.<br>See sections 3.2, 3.4 and 3.6 and annex. | 1-5,7-13<br><br>6 |
| A | SPREADTRUM COMMUNICATIONS. Discussion on joint channel estimation for PUSCH. R1-2111108, 3GPP TSG RAN WG1 Meeting #107-e, e-Meeting. 05 November 2021.<br>See sections 2-3. | 1-13 |
| A | WILUS INC. Discussion on joint channel estimation for PUSCH. R1-2112391, 3GPP TSG RAN WG1 Meeting #107-e, e-Meeting. 06 November 2021.<br>See section 2. | 1-13 |
| A | NOKIA et al. Joint channel estimation for PUSCH coverage enhancements. R1-2110865, 3GPP TSG RAN WG1 Meeting #107-e, e-Meeting. 05 November 2021.<br>See sections 2-2.2.4. | 1-13 |
| A | US 2020-0403768 A1 (QUALCOMM INCORPORATED) 24 December 2020 (2020-12-24)<br>See paragraphs [0065]-[0094]; and claims 1-30. | 1-13 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2023** | **11 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/000116**

| Patent document cited in search report | | | Publication date (day/month/year) | Patent family member(s) | | | Publication date (day/month/year) |
|---|---|---|---|---|---|---|---|
| US | 2020-0403768 | A1 | 24 December 2020 | CN | 114008958 | A | 01 February 2022 |
| | | | | EP | 3987703 | A1 | 27 April 2022 |
| | | | | US | 11310022 | B2 | 19 April 2022 |
| | | | | WO | 2020-256903 | A1 | 24 December 2020 |

Form PCT/ISA/210 (patent family annex) (July 2022)